(19) Europäisches Patentamt / European Patent Office / Office européen des brevets

(11) **EP 2 421 336 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
***H05B 41/292*** *(2006.01)*      ***H05B 41/288*** *(2006.01)*

(21) Anmeldenummer: **11175396.8**

(22) Anmeldetag: **26.07.2011**

(54) **Elektronisches Vorschaltgerät zum Betreiben mindestens einer Entladungslampe**

Electronic ballast device for operating at least one discharge lamp

Ballast électronique destiné au fonctionnement d'au moins une lampe à décharge

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2010 DE 102010039430**

(43) Veröffentlichungstag der Anmeldung:
**22.02.2012 Patentblatt 2012/08**

(73) Patentinhaber: **OSRAM GmbH**
**80807 München (DE)**

(72) Erfinder:
• **Mayer, Siegfried**
**85452 Moosinning (DE)**
• **Busse, Olaf**
**80686 München (DE)**

(56) Entgegenhaltungen:
EP-A1- 0 596 740      EP-A1- 1 189 490
EP-A2- 1 624 733      WO-A1-02/098187
DE-A1- 10 045 712      DE-A1-102009 020 884
DE-C1- 19 708 783      US-A- 5 623 187
US-A1- 2003 076 053

## Beschreibung

### Technisches Gebiet

Die vorliegende Erfindung betrifft eine elektronisches Vorschaltgerät zum Betreiben mindestens einer Entladungslampe mit einem Eingang mit einem ersten und einem zweiten Eingangsanschluss zum Koppeln mit einer Versorgungswechselspannung, einem Gleichrichter mit einem Eingang und einem Ausgang, wobei der Eingang des Gleichrichters mit dem ersten und dem zweiten Eingangsanschluss gekoppelt ist, einer Vorrichtung zur Leistungsfaktorkorrektur mit einem Eingang und einem Ausgang, wobei der Eingang der Vorrichtung zur Leistungsfaktorkorrektur mit dem Ausgang des Gleichrichters gekoppelt ist und die Vorrichtung zur Leistungsfaktorkorrektur einen Spannungswandler mit einer Induktivität, einer Diode und einem Schalter umfasst, wobei am Ausgang der Vorrichtung zur Leistungsfaktorkorrektur im Betrieb des elektronischen Vorschaltgeräts eine Zwischenkreisspannung bereitstellbar ist, einem Lastkreis mit einem ersten und einem zweiten Ausgangsanschluss zum Koppeln mit der mindestens einen Entladungslampe, wobei der Lastkreis mit dem Ausgang der Vorrichtung zur Leistungsfaktorkorrektur gekoppelt ist, und einer Steuervorrichtung mit einem I-Regler mit einem Sollwerteingang und einem Istwerteingang, wobei der Sollwerteingang mit einer Sollwertbereitstellungsvorrichtung zur Bereitstellung einer mit dem Sollwert der Zwischenkreisspannung korrelierten Größe gekoppelt ist, wobei der Istwerteingang mit einem Knoten des Lastkreises gekoppelt ist zur Bereitstellung einer mit dem Istwert der Zwischenkreisspannung korrelierten Größe, wobei die Steuervorrichtung ausgelegt ist, an ihrem Ausgang ein Steuersignal an den Schalter des Spannungswandlers bereitzustellen, wobei das Steuersignal ein Rechtecksignal ist, wobei die Regelgröße des I-Reglers einen ersten Anteil der On-Zeit des Steuersignals darstellt, wobei die On-Zeit die Zeitdauer innerhalb einer Periode des Rechtecksignals darstellt, innerhalb der der Schalter des Spannungswandlers leitend geschaltet ist.

### Stand der Technik

In den Schriften DE 100 45 712 A1, US 2003/0076053 A1, US 5,623,187, EP 1 189 490 A1, DE 197 08783 C1, DE 10 2009 020884 A1 und EP 1 624 733 A2 ist die Regelung der Leistung bzw. des Stroms einer Entladungslampe beschrieben.

Aus dem Stand der Technik bekannte elektronische Vorschaltgeräte verwenden beispielsweise einen Boost-Konverter als Spannungswandler der Vorrichtung zur Leistungsfaktorkorrektur (PFC = Power Factor Correction). Dabei lassen sich halbwegs konstante Zwischenkreisspannungen mithilfe eines langsamen I-Reglers erzeugen. Dabei muss die Zeitkonstante des I-Reglers gross sein, um die PFC-Eigenschaften des Spannungswandlers zu erhalten, das heißt eine sinusförmige Stromaufnahme zu ermöglichen. Bei plötzlichen Laständerungen, wie sie beispielsweise beim Zünden und anschließender Übernahme der Entladungslampe auftreten, muss die Zwischenkreisspannung erst deutlich abfallen, bevor der I-Regler reagieren kann. Die langsame I-Charakteristik des Reglers erzeugt zudem eine weitere Zeitverzögerung, bevor die Regelung einsetzt. Dabei sinkt die Zwischenkreisspannung unerwünscht weit ab. Dies führt bei grenzwertig ausgelegten Lastkreisen dann zu unerwünschten Betriebspunkten. Dies kann darin resultieren, dass die Entladungslampe nicht zündet oder das elektronische Vorschaltgerät abschaltet.

Um dies zu verhindern, werden im Stand der Technik entsprechende Reserven im Lastkreis eingebaut. Der Lastkreis ist deshalb im Stand der Technik so zu dimensionieren, dass er auch mit niedrigeren Zwischenkreisspannungen eine ausreichende Leistung, beispielsweise zum Zünden der Lampe, bereitstellen kann. Dazu wird beispielsweise der Kondensator am Ausgang des Spannungswandlers groß dimensioniert und ebenso die Lampendrossel. Durch diese Maßnahmen kann mehr Blindstrom bereitgestellt werden, der eine Zündung der Entladungslampe auch bei niedriger Zwischenkreisspannung noch ermöglicht. Aufgrund des dabei fließenden hohen Blindstroms entstehen unerwünscht hohe Verluste. Der Wirkungsgrad eines derartigen elektronischen Vorschaltgeräts ist als Folge davon unerwünscht niedrig.

Aus der WO 02/098187 A1 sowie aus der EP 0 596 740 A1 sind Schaltungsanordnungen zum Regeln der Lampenleistung, beispielsweise um eine Alterung der Entladungslampe zu berücksichtigen, bekannt.

### Darstellung der Erfindung

Die Aufgabe der vorliegenden Erfindung besteht deshalb darin, ein gattungsgemäßes elektronisches Vorschaltgerät derart weiterzubilden, dass ein möglichst hoher Wirkungsgrad ermöglicht wird.

Diese Aufgabe wird gelöst durch ein elektronisches Vorschaltgerät mit den Merkmalen von Patentanspruch 1.

Die vorliegende Erfindung basiert auf der Erkenntnis, dass die obige Aufgabe gelöst werden kann, wenn das Steuersignal für den Schalter des Spannungswandlers in Abhängigkeit der in der Entladungslampe umgesetzten Leistung variiert wird. Dabei wird die in der Entladungslampe umgesetzte Leistung als Störgröße interpretiert und der Vorrichtung zur Leistungsfaktorkorrektur als Stellgröße zugeführt. Damit ist ein Reagieren auf Lastsprünge möglich noch bevor die Zwischenkreisspannung einbricht. Besonders begünstigt wird die vorliegende Erfindung dadurch, dass in modernen Mikrocontrollern, die als Steuervorrichtung verwendet werden können, die Leistung des Ausgangskreises zum Zwecke der Leistungsregelung ohnehin häufig gemessen wird. Damit liegt ein entsprechender Messwert häufig bereits vor, so dass der zusätzliche Aufwand zur Umsetzung der vorliegenden Erfindung klein gehalten werden kann.

Die für das Absenken der Zwischenkreisspannung maßgebliche Zeitkonstante ist definiert durch die Kapazität des Kondensators am Ausgang des Spannungswandlers sowie den Widerstand des Lastkreises. Sie beträgt üblicherweise zwischen 2 ms und 10 ms. Die Zeitkonstante, die für die Variation des Steuersignals im Hinblick auf die in der Lampe umgesetzte Leistung maßgeblich ist, beträgt hingegen vorliegend etwa zwischen 400 μs und 1 ms. Dadurch kann dem Absinken der Zwischenkreisspannung rechtzeitig entgegengewirkt werden. Einbrüche der Zwischenkreisspannung können zuverlässig verhindert werden. Dadurch kann der Elektrolytkondensator sowie die Lampendrossel vergleichsweise klein dimensioniert werden, wodurch sich geringere Verluste als im Stand der Technik ergeben. Der Wirkungsgrad eines erfindungsgemäßen elektronischen Vorschaltgeräts liegt daher deutlich über dem Wirkungsgrad der oben erwähnten bekannten Vorgehensweise.

Erfindungsgemäß ist die Steuervorrichtung ausgelegt, einen zweiten Anteil der On-Zeit des Steuersignals in Abhängigkeit der in der Entladungslampe umgesetzten Leistung bereitzustellen. Neben dem ersten Anteil, der vom I-Regler stammt, wird demnach ein zweiter Anteil in Abhängigkeit der in der Entladungslampe umgesetzten Leistung hinzugefügt. Dadurch lassen sich sehr schnell längere Einschaltzeiten des Schalters des Spannungsreglers erzielen, wodurch ein besonders schnelles Nachladen des Kondensators am Ausgang des Spannungswandlers ermöglicht wird. Ein unerwünschtes Absinken der Zwischenkreisspannung kann dadurch zuverlässig vermieden werden. Nach Beendigung der erhöhten Leistungsanforderung, wird der zweite Anteil der On-Zeit wieder entsprechend reduziert.

Die Steuervorrichtung kann insbesondere ausgelegt sein, bei Feststellung einer Erhöhung der in der mindestens einen Entladungslampe umgesetzten Leistung den zweiten Anteil der On-Zeit ebenfalls zu erhöhen. Auf kurzfristige Leistungsanforderungen im Lastkreis kann damit schnell reagiert werden.

Die Zeitkonstante des I-Reglers ist größer, insbesondere um ein Vielfaches, als die Zeitkonstante der Variation in Abhängigkeit der in der mindestens einen Entladungslampe umgesetzten Leistung. Dadurch kann der I-Regler wie gewünscht zur Erzielung der Leistungsfaktorkorrektur die vergleichsweise langsame Nachladung des Kondensators am Ausgang des Spannungswandlers bewirken, während die Regelung in Abhängigkeit der in der mindestens einen Entladungslampe umgesetzten Leistung auf die schnellen Leistungsanforderungen, beispielsweise beim Zünden der Entladungslampe, reagieren kann.

Besonders bevorzugt ist dem I-Regler ein P-Regler parallel geschaltet. Der P-Regler liefert dabei bevorzugt einen dritten Anteil der On-Zeit des Steuersignals. Damit kann im Normalbetrieb, das heißt ohne außergewöhnliche Leistungsanforderung des Lastkreises, die Regelung mittels des I-Reglers und des P-Reglers erfolgen. Ein P-Regler kann naturgemäß schneller auf Variationen der Zwischenkreisspannung reagieren als ein I-Regler.

Durch eine besonders geeignete Auslegung des P-Reglers kann dabei sichergestellt werden, dass keine Verletzung der PFC-Bedingung eintritt. In diesem Zusammenhang ist es deshalb bevorzugt, wenn die Übertragungsfunktion des P-Reglers, die die Abhängigkeit des dritten Anteils der On-Zeit von einer Änderungen der Zwischenkreisspannung wiedergibt, einen flachen Mittenabschnitt im Bereich des Nulldurchgangs, das heißt des Sollwerts der Zwischenkreisspannung, aufweist. Durch diesen flachen Mittenabschnitt kann sichergestellt werden, dass der 100 Hz-Ripple (bei einer Versorgungswechselspannung mit einer Frequenz von 50 Hz) im Normalbetrieb nicht zum Verlassen der PFC-Bedingung führt. Der P-Regler reagiert demnach erst auf Änderungen, die zu einem Verlassen des durch den 100 Hz-Ripple vorgegebenen Fensters der Zwischenkreisspannung führen würden. Die Änderungsgeschwindigkeit, mit der der P-Regler auf eine Änderung reagiert, die nicht vom I-Regler abgedeckt wird, wird durch die Übertragungsfunktion des P-Reglers definiert. Wenn diese die Abhängigkeit des dritten Anteils der On-Zeit von einer Änderung der Zwischenkreisspannung wiedergibt, so weist die Übertragungsfunktion des P-Reglers zumindest einen Abschnitt mit einer vorgebbaren Steigung auf. Besonders bevorzugt ist die Steuervorrichtung ausgelegt, diese vorgebbare Steigung des mindestens einen Abschnitts der Übertragungsfunktion des P-Reglers zu variieren, insbesondere in Abhängigkeit einer Änderung oder einer Änderungsgeschwindigkeit der Zwischenkreisspannung. Nach dem Aktivwerden des P-Reglers kann beispielsweise die Steigung dieses mindestens einen Abschnitts der Übertragungsfunktion des P-Reglers langsam reduziert werden, so dass der I-Regler, der naturgemäß eine große, d.h. langsame Zeitkonstante aufweist, den Reglungsanteil des P-Reglers allmählich wieder übernehmen kann.

Besonders bevorzugt ist die Steuervorrichtung ausgelegt, die einzelnen Anteile der On-Zeit zu addieren. Demnach deckt der I-Regler die langsamen Variationen der Zwischenkreisspannung infolge der Netzfrequenz ab. Der P-Regler greift ein, wenn beispielsweise durch Absinken der Netzspannung die Gefahr besteht, dass der vorgebbare Wert den Bereich der Zwischenkreisspannung verlassen wird. Bei außergewöhnlichen Leistungsanforderungen des Lastkreises wird hingegen die Variation des Steuersignals an den Schalter des Spannungswandlers infolge der in der Entladungslampe umgesetzten Leistung aktiv. Durch das Zusammenwirken dieser drei Maßnahmen zur Regelung der Zwischenkreisspannung können unerwünschte Betriebspunkte der Entladungslampe unter weitgehender Einhaltung der PFC-Bedingung zuverlässig vermieden werden.

Bei einem besonders bevorzugten Ausführungsbeispiel stellt der Spannungswandler einen Boost-Konverter dar.

Weitere bevorzugte Ausführungsformen ergeben sich aus den Unteransprüchen.

## Kurze Beschreibung der Zeichnung(en)

Im Nachfolgenden wird nunmehr ein Ausführungsbeispiel der vorliegenden Erfindung unter Bezugnahme auf die beigefügten Zeichnungen näher beschrieben. Es zeigen:

Fig. 1 in schematischer Darstellung den zeitlichen Verlauf der Zwischenkreisspannung ohne (Kurvenzug a)) und mit Regelung durch ein erfindungsgemäßes elektronisches Vorschaltgerät (Kurvenzug b)); und

Fig. 2 in schematischer Darstellung ein Ausführungsbeispiel eines erfindungsgemäßen elektronischen Vorschaltgeräts.

## Bevorzugte Ausführung der Erfindung

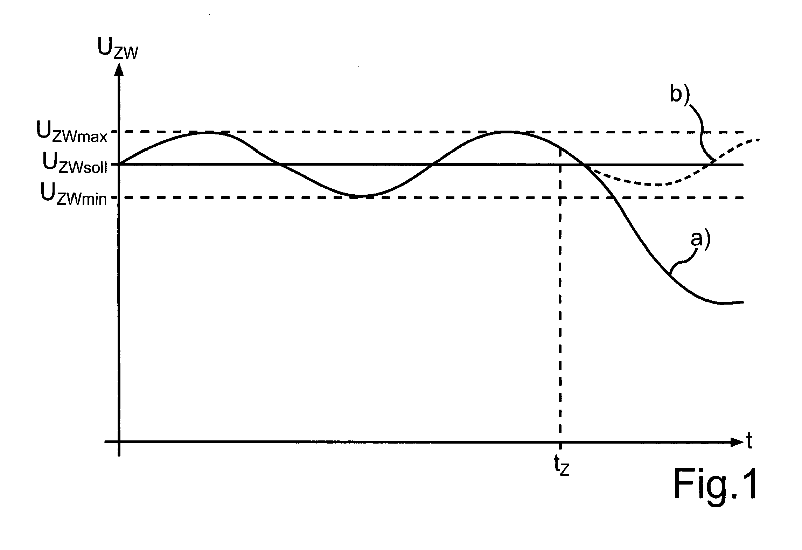

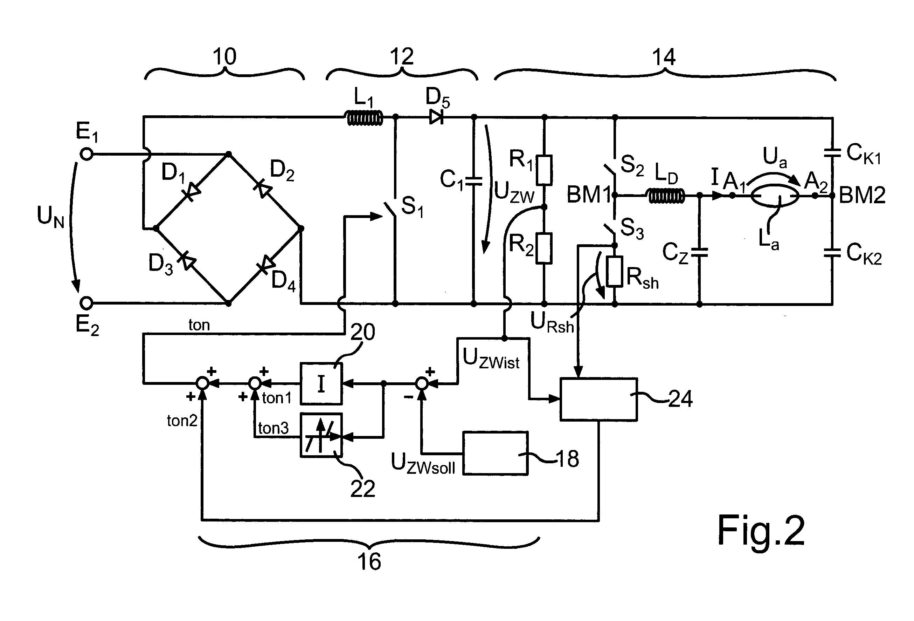

Fig. 1 zeigt in schematischer Darstellung den zeitlichen Verlauf der Zwischenkreisspannung $U_{ZW}$ für ein bekanntes elektronisches Vorschaltgerät, siehe Kurvenzug a), sowie für ein erfindungsgemäßes elektronisches Vorschaltgerät, siehe Kurvenzug b). Wie zu erkennen ist, schwankt die Zwischenkreisspannung $U_{zw}$ infolge des Ripples aufgrund der Netzwechselfrequenz um einen Sollwert Uzwsoll. Sie schwankt insbesondere zwischen einem Minimalwert $U_{ZWmin}$ und einem Maximalwert $U_{ZWmax}$. Zum Zeitpunkt $t_z$ soll eine am Ausgang des elektronischen Vorschaltgeräts angeschlossene Entladungslampe gezündet werden. Aufgrund der hohen Leistungsanforderung sinkt die Zwischenkreisspannung $U_{zw}$ beim Stand der Technik, siehe Kurvenzug a), unter den erlaubten Minimalwert $U_{ZWmin}$ ab. Dadurch ergeben sich unerwünschte Betriebszustände, die ein Zünden der Entladungslampe unmöglich machen und zu einem Abschalten des elektronischen Vorschaltgeräts führen können. Bei einem erfindungsgemäßen elektronischen Vorschaltgerät hingegen wird zum Zeitpunkt $t_z$ eine erhöhte Leistungsanforderung im Lastkreis registriert und eine Regelung in Gang gesetzt, die mit Bezug auf Fig. 2 noch näher erläutert werden wird. Dies führt dazu, dass ein Absinken der Zwischenkreisspannung $U_{ZW}$ unter den zulässigen Minimalwert $U_{ZWmin}$ zuverlässig verhindert werden kann, siehe Kurvenzug b).

Fig. 2 zeigt in schematischer Darstellung ein Ausführungsbeispiel eines erfindungsgemäßen elektronischen Vorschaltgeräts. Dieses umfasst einen Eingang mit einem ersten E1 und einem zweiten Eingangsanschluss E2, zwischen denen eine Versorgungswechselspannung $U_N$, insbesondere eine Netzspannung, angeschlossen werden kann. Zwischen die Eingangsanschlüsse E1, E2 ist der Eingang eines Gleichrichters 10 gekoppelt, der die Dioden D1 bis D4 umfasst. Mit dem Ausgang des Gleichrichters 10 ist eine Vorrichtung 12 zur Leistungsfaktorkorrektur gekoppelt, die vorliegend einen Spannungswandler, insbesondere einen Boost-Konverter, umfasst. Der Boost-Konverter umfasst seinerseits eine Induktivität L1 eine Diode D5 sowie einen Schalter S1. Am Ausgang der Vorrichtung 12 zur Leistungsfaktorkorrektur wird an einem Kondensator C1, der insbesondere als Elektrolytkondensator ausgeführt sein kann, die so genannte Zwischenkreisspannung $U_{zw}$ an einen Lastkreis 14 bereitgestellt. Der Lastkreis 14 umfasst im vorliegenden Ausführungsbeispiel einen Wechselrichter in Halbbrückenanordnung, wobei die Halbbrücke die Schalter S2, S3 sowie die Koppelkondensatoren $C_{K1}$ und $C_{K2}$ umfasst. Mit dem ersten Halbbrückenmittelpunkt BM1, der den Kopplungspunkt der Schalter S2 und S3 darstellt, ist eine Lampendrossel $L_D$ verbunden. Der andere Anschluss der Lampendrossel $L_D$ ist mit einem ersten Ausgangsanschluss A1 gekoppelt. Zwischen den Ausgangsanschluss A1 und ein Bezugspotential, das vorliegend der zweite Ausgangsanschluss des Gleichrichters 10 darstellt, ist ein Zündkondensator $C_Z$ zum Zünden der Entladungslampe gekoppelt. Ein zweiter Ausgangsanschluss A2 des elektronischen Vorschaltgeräts ist mit dem zweiten Halbbrückenmittelpunkt BM2 gekoppelt, der den Kopplungspunkt der Koppelkondensatoren $C_{K1}$ und $C_{K2}$ darstellt. Zwischen die Ausgangsanschlüsse A1 A2, die den Ausgang des elektronischen Vorschaltgeräts bilden, ist eine Entladungslampe La angeschlossen.

Im Nachfolgenden wird eine Steuervorrichtung 16, die an ihrem Ausgang ein Steuersignal an den Schalter S1 der Vorrichtung 12 zur Leistungsfaktorkorrektur bereitstellt, näher erläutert. Diese umfasst eine Sollwertbereitstellungsvorrichtung 18, die einen Sollwert $U_{ZWsoll}$ für die Zwischenkreisspannung $U_{zw}$ bereitstellt. Ein Istwert $U_{Zwist}$ der Zwischenkreisspannung $U_{zw}$ wird mittels eines Spannungsteilers R1, R2 gewonnen, wobei der Spannungsteiler R1, R2 dem Kondensator C1 parallel geschaltet ist. Die Differenz zwischen dem Istwert $U_{Zwist}$ und dem Sollwert $U_{ZWsoll}$ der Zwischenkreisspannung wird einerseits einem I-Regler 20 zugeführt und andererseits einem P-Regler 22. Der I-Regler weist eine Zeitkonstante von etwa 20 bis 50 ms auf und stellt an seinem Ausgang einen ersten Anteil $t_{on1}$ der On-Zeit $t_{on}$ des Steuersignals für den Schalter S1 bereit. Dieses Steuersignal ist ein Rechtecksignal, wobei die On-Zeit $t_{on}$ die Zeitdauer innerhalb einer Periode des Rechtecksignals darstellt, innerhalb der der Schalter S1 leitend geschaltet ist. Der P-Regler 22 weist zwei Abschnitte mit einer vorgebbaren Steigung auf sowie einen flachen Mittenabschnitt. Das schematisch eingezeichnete Koordinatenkreuz gibt die Abhängigkeit eines weiteren Anteils $t_{on3}$ der On-Zeit $t_{on}$ im Arbeitspunkt $U_{ZWsoll}$ wieder. Durch den flachen Mittenabschnitt kann sichergestellt werden, dass die übliche Regelung der Zwischenkreisspannung $U_{zw}$ vom I-Regler 20 vorgenommen wird, während der P-Regler 22 nur dann eingreift, wenn der Schwankungsbereich infolge der Netzripple, siehe Fig. 1, verlassen wird. Der P-Regler weist eine Zeitkonstante von 2 ms bis 10 ms auf. Die Steuervorrichtung 16 kann ausgebildet sein, die vorgebbare Steigung der beiden Abschnitte der Übertragungsfunktion des P-Reglers zu variieren, insbesondere in Abhängigkeit einer Änderung oder einer Änderungsgeschwindigkeit der Zwischenkreisspannung. So wird ermöglicht, dass der I-Regler 20 allmählich wieder den zwischenzeitlich vom P-Regler 22 übernommenen Anteil der On-Zeit übernehmen kann. Unzulässige Schwankungen der Zwischenkreisspannung $U_{ZW}$ werden dadurch vermieden. Erfindungsgemäß ist vorgesehen, einen weiteren Anteil $t_{on2}$ der On-Zeit $t_{on}$ des Steuersignals für den Schalter S1 der Vorrichtung 12 zur Leistungsfaktorkorrektur bereitzustellen. Dazu wird in einer Leistungsermittlungsvorrichtung 24 die im Lastkreis 14, insbesondere in der Lampe La, umgesetzte Leistung ermittelt. Zu diesem Zweck wird der Leistungsermittlungsvorrichtung 24 die über einem Shuntwiderstand $R_{sh}$, der seriell zu den Schaltern S2, S3 des Wechselrichters angeordnet ist, abfallende Spannung $U_{Rsh}$ zugeführt. Diese ist proportional zum Strom I, der an die Entladungslampe La bereitgestellt wird. Weiterhin ist die Leistungsermittlungsvorrichtung 24 mit dem Abgriff des Spannungsteilers R1, R2 zur Zuführung einer Größe gekoppelt, die mit dem Istwert $U_{Zwist}$ der Zwischenkreisspannung $U_{zw}$ korreliert ist. Aus diesen beiden zugeführten Spannungen ermittelt die Leistungsermittlungsvorrichtung 24 die im Lastkreis 14, insbesondere in der Lampe La, umgesetzte Leistung. Andere Möglichkeiten, diese Leistung zu ermitteln, sind dem Fachmann hinlänglich bekannt und erfüllen ihren Zweck ebenso. Auf der Basis dieser ermittelten Leistung stellt die Leistungsermittlungsvorrichtung 24 unter Zuhilfenahme einer look-up table, in der die Abhängigkeit zwischen der ermittelten Leistung und dem Anteil $t_{on3}$ der On-Zeit wiedergegeben ist, den weiteren Anteil $t_{on3}$ der On-Zeit $t_{on}$ des Steuersignals für den Schalter S1 bereit. Dieser wird zu den beiden anderen Anteilen $t_{on1}$ und $t_{on3}$ hinzuaddiert, so dass sich ergibt:

$$t_{on} = t_{on1} + t_{on2} + t_{on3}.$$

Durch die Bereitstellung des leistungsabhängigen Anteils $t_{on2}$ der On-Zeit $t_{on}$ kann die Regelung auf Lastsprünge reagieren, noch bevor die Zwischenkreisspannung $U_{zw}$ einbricht. Durch den flachen Mittenabschnitt des P-Reglers 22 wird demnach eine Einhaltung der PFC-Bedingung im normalen Betrieb des elektronischen Vorschaltgeräts ermöglicht. Lediglich in Ausnahmesituationen, beispielsweise bei einem außergewöhnlichen Abfallen der Eingangsspannung $U_N$ greift der P-Regler ein, um die Zwischenkreisspannung $U_{ZW}$ auf den Sollwert $U_{ZWsoll}$ zurückzuregeln. Der P-Regler 22 alleine ist jedoch nicht in der Lage, auf außergewöhnliche Leistungsanforderungen im Lastkreis 14 zu reagieren, da, falls die Leistungsänderung in der Nähe des Netznulldurchgangs stattfindet, der P-Regler 22 keine Nachladung des Kondensators C1 bewirken kann. Durch den leistungsabhängigen Anteil $t_{on2}$ der On-Zeit $t_{on}$ hingegen, kann bereits bei Erkennen einer erhöhten Leistungsanforderung mit dem Nachladen des Kondensators C1 begonnen werden, so dass nicht erst das Absinken der Zwischenkreisspannung $U_{zw}$ unter den Minimalwert $U_{ZWmin}$ abgewartet werden muss. Durch diese frühzeitige Reaktion auf Leistungsanforderungen im Lastkreis 14 kann ein Absinken der Zwischenkreisspannung $U_{zw}$ unter den Minimalwert $U_{ZWmin}$ zuverlässig vermieden werden. Ein erfindungsgemäßes elektronisches Vorschaltgerät nimmt daher keine unerwünschten Betriebspunkte ein.

## Patentansprüche

1. Elektronisches Vorschaltgerät zum Betreiben mindestens einer Entladungslampe (La) mit

- einem Eingang mit einem ersten (E1) und einem zweiten Eingangsanschluss (E2) zum Koppeln mit einer Versorgungswechselspannung ($U_N$);
- einem Gleichrichter (10) mit einem Eingang und einem Ausgang, wobei der Eingang des Gleichrichters (10) mit dem ersten (E1) und dem zweiten Eingangsanschluss (E2) gekoppelt ist;
- einer Vorrichtung (12) zur Leistungsfaktorkorrektur mit einem Eingang und einem Ausgang, wobei der Eingang der Vorrichtung (12) zur Leistungsfaktorkorrektur mit dem Ausgang des Gleichrichters (10) gekoppelt ist und die Vorrichtung (12) zur Leistungsfaktorkorrektur einen Spannungswandler mit einer Induktivität (L1), einer Diode (D5) und einem Schalter (S1) umfasst, wobei am Ausgang der Vorrichtung (12) zur Leistungsfaktorkorrektur im Betrieb des elektronischen Vorschaltgeräts eine Zwischenkreisspannung ($U_{ZW}$) bereitstellbar ist;
- einem Lastkreis (14) mit einem ersten (A1) und einem zweiten Ausgangsanschluss (A2) zum Koppeln mit der mindestens einen Entladungslampe (La), wobei der Lastkreis (14) mit dem Ausgang der Vorrichtung (12) zur Leistungsfaktorkorrektur gekoppelt ist; und
- einer Steuervorrichtung (16) mit einem I-Regler (20) mit einem Sollwerteingang und einem Istwerteingang, wobei der Sollwerteingang mit einer Sollwertbereitstellungsvorrichtung (18) zur Bereitstellung einer mit einem Sollwert der Zwischenkreisspannung ($U_{ZW}$) korrelierten Größe ($U_{ZWSOLL}$) gekoppelt ist, wobei der Istwerteingang mit dem Lastkreis (14) gekoppelt ist zur Bereitstellung einer mit einem Istwert der Zwischenkreisspannung ($U_{ZW}$) korrelierten Größe ($U_{ZWIST}$), wobei die Steuervorrichtung (16) ausgelegt ist, an ihrem Ausgang ein Steuersignal an den Schalter (S1) des Spannungswandlers bereitzustellen, wobei das Steuersignal ein Rechtecksignal ist, wobei eine Regelgröße des I-Reglers (20) einen ersten Anteil ($t_{on1}$) der On-Zeit ($t_{on}$) des Steuersignals darstellt, wobei die On-Zeit ($t_{on}$) die Zeitdauer innerhalb einer Periode des Rechtecksignals darstellt, innerhalb der der Schalter (S1) des Spannungswandlers leitend geschaltet ist, **dadurch gekennzeichnet,**

**dass** das elektronische Vorschaltgerät weiterhin eine Leistungsermittlungsvorrichtung (24) umfasst, die ausgelegt ist, eine mit einer im Betrieb der mindestens einen Entladungslampe (La) in der Entladungslampe (La) umgesetzten Leistung korrelierte Größe zu ermitteln, wobei die Leistungsermittlungsvorrichtung (24) mit der Steuervorrichtung (16) gekoppelt ist, wobei die Steuervorrichtung (16) ausgelegt ist, das Steuersignal in Abhängigkeit der in der Entladungslampe (La) umgesetzten Leistung zu variieren, wobei die Steuervorrichtung (16) ausgelegt ist, einen zweiten Anteil ($t_{on2}$) der On-Zeit ($t_{on}$) des Steuersignals in Abhängigkeit der in der Entladungslampe (La) umgesetzten Leistung bereitzustellen, wobei die Zeitkonstante des I-Reglers (20) größer ist, als die Zeitkonstante der Variation in Abhängigkeit der in der mindestens einen Entladungslampe (La) umgesetzten Leistung, wobei die Steuervorrichtung (16) ausgelegt ist, die einzelnen Anteile ($t_{on1}$, $t_{on2}$, $t_{on3}$) der On-Zeit ($t_{on}$) zu addieren.

2.  Elektronisches Vorschaltgerät nach Anspruch 1, **dadurch gekennzeichnet,** **dass** die Steuervorrichtung (16) ausgelegt ist, bei Feststellung einer Erhöhung der in der mindestens einen Entladungslampe (La) umgesetzten Leistung den zweiten Anteil ($t_{on2}$) der On-Zeit ($t_{on}$) zu erhöhen.

3.  Elektronisches Vorschaltgerät nach einem der Ansprüche 1 oder 2, **dadurch gekennzeichnet,** **dass** dem I-Regler (20) ein P-Regler (22) parallel geschaltet ist.

4.  Elektronisches Vorschaltgerät nach Anspruch 3, **dadurch gekennzeichnet,** **dass** der P-Regler (22) einen dritten Anteil ($t_{on3}$) der On-Zeit ($t_{on}$) des Steuersignals bereitstellt.

5.  Elektronisches Vorschaltgerät nach einem der Ansprüche 3 oder 4, **dadurch gekennzeichnet,** **dass** die Übertragungsfunktion des P-Reglers (22), die die Abhängigkeit des dritten Anteils ($t_{on3}$) der On-Zeit ($t_{on}$) von einer Änderung der Zwischenkreisspannung ($U_{ZW}$) wiedergibt, einen flachen Mittenabschnitt im Bereich des Nulldurchgangs aufweist.

6.  Elektronisches Vorschaltgerät nach einem der Ansprüche 3 bis 5, **dadurch gekennzeichnet,** **dass** die Übertragungsfunktion des P-Reglers (22), die die Abhängigkeit des dritten Anteils ($t_{on3}$) der On-Zeit ($t_{on}$) von einer Änderung der Zwischenkreisspannung ($U_{ZW}$) wiedergibt, zumindest einen Abschnitt mit einer vorgebbaren Steigung aufweist.

7.  Elektronisches Vorschaltgerät nach Anspruch 6, **dadurch gekennzeichnet,** **dass** die Steuervorrichtung (16) ausgelegt ist, die vorgebbare Steigung des mindestens einen Abschnitts der Übertragungsfunktion des P-Reglers (22) zu variieren, insbesondere in Abhängigkeit einer Änderung oder einer Änderungsgeschwindigkeit der Zwischenkreisspannung ($U_{ZW}$).

8.  Elektronisches Vorschaltgerät nach einem der vorhergehenden Ansprüche, **dadurch gekennzeichnet,** **dass** der Spannungswandler einen Boost-Konverter darstellt.

**Claims**

1.  Electronic ballast for operation of at least one discharge lamp (La) having

    - an input having a first input connection (E1) and a second input connection (E2) for coupling to an AC supply voltage ($U_N$);
    - a rectifier (10) having an input and an output, with the input of the rectifier (10) being coupled to the first input connection (E1) and the second input connection (E2);
    - an apparatus (12) for power factor correction having an input and an output, with the input of the apparatus (12) for power factor correction being coupled to the output of the rectifier (10), and with the apparatus (12) for power factor correction comprising a voltage converter having an inductance (L1), a diode (D5) and a switch (S1) in which case an intermediate-circuit voltage ($U_{ZW}$) can be produced at the output of the apparatus (12) for power factor correction during operation of the electronic ballast;
    - a load circuit (14) having a first output connection (A1) and a second output connection (A2) for coupling to the at least one discharge lamp (La), with the load circuit (14) being coupled to the output of the apparatus (12) for power factor correction; and
    - a control apparatus (16) having an I regulator (20) with a nominal value input and an actual value input, with the nominal value input being coupled to a nominal-value production apparatus (18) for production of a variable ($U_{ZWSOLL}$) which is correlated with the nominal value of the intermediate-circuit voltage ($U_{ZW}$), with the actual value input being coupled to the load circuit (14) for production of a variable ($U_{ZWIST}$) which is correlated with an actual value of the intermediate-circuit voltage ($U_{ZW}$), with the control apparatus (16) being designed to produce at its output a control signal to the switch (S1) of the voltage converter, with the control signal being a square-wave signal, with a controlled variable of the I regulator (20) representing a first component ($t_{on1}$) of the on time ($t_{on}$) of the control signal, with the on time ($t_{on}$) representing the time duration within one period of the square-wave signal, within which the switch (S1) in the voltage converter is switched on,

**characterized**
**in that** the electronic ballast furthermore comprises a power determining apparatus (24), which is designed to determine a variable which is correlated with a power consumed in the discharge lamp (La) during operation of the at least one discharge lamp (La), with the power determining apparatus (24) being coupled to the control apparatus (16), and with the control apparatus (16) being designed to vary the control signal as a function of the power consumed in the discharge lamp (La), with the control apparatus (16) being designed to produce a second component ($t_{on2}$) of the on time ($t_{on}$) of the control signal as a function of the power consumed in the discharge lamp (La),
with the time constant of the I regulator (20) being greater than the time constant of the variation as a function of the power consumed in the at least one discharge lamp (La),
with the control apparatus (16) being designed to add the individual components ($t_{on1}$, $t_{on2}$, $t_{on3}$) of the on time ($t_{on}$).

2. Electronic ballast according to Claim 1,
**characterized**
**in that** the control apparatus (16) is designed to increase the second component ($t_{on2}$) of the on time ($t_{on2}$) when an increase is found in the power consumed in the at least one discharge lamp (La).

3. Electronic ballast according to one of Claims 1 or 2,
**characterized**
**in that** a P regulator (22) is connected in parallel with the I regulator (20).

4. Electronic ballast according to Claim 3,
**characterized**
**in that** the P regulator (22) produces a third compo-

nent ($t_{on3}$) of the on time ($t_{on}$) of the control signal.

5. Electronic ballast according to one of Claims 3 or 4,
**characterized**
**in that** the transfer function of the P regulator (22), which reflects the relationship between the third component ($t_{on3}$) and the on time ($t_{on}$) and a change in the intermediate-circuit voltage ($U_{ZW}$), has a flat center section in the area of the zero crossing.

6. Electronic ballast according to one of Claims 3 to 5,
**characterized**
**in that** the transfer function of the P regulator (22), which reproduces the relationship between the third component ($t_{on3}$) of the on time ($t_{on}$) and a change in the intermediate-circuit voltage ($U_{ZW}$), has at least one section with a predeterminable gradient.

7. Electronic ballast according to Claim 6, **characterized**
**in that** the control apparatus (16) is designed to vary the predeterminable gradient of the at least one section of the transfer function of the P regulator (22), in particular as a function of a change or a rate of change in the intermediate-circuit voltage (Uzw).

8. Electronic ballast according to one of the preceding claims,
**characterized**
**in that** the voltage converter represents a boost converter.

**Revendications**

1. Ballast électronique pour faire fonctionner au moins une lampe à décharge (La) comprenant

- une entrée ayant une première (E1) et une deuxième borne d'entrée (E2) pour le couplage avec une tension alternative d'alimentation ($U_N$) ;
- un redresseur (10) ayant une entrée et une sortie, l'entrée du redresseur (10) étant couplée à la première (E1) et la deuxième borne d'entrée (E2) ;
- un dispositif (12) de correction de facteur de puissance ayant une entrée et une sortie, l'entrée du dispositif (12) de correction de facteur de puissance étant couplée à la sortie du redresseur (10), et le dispositif (12) de correction de facteur de puissance comprenant un transformateur de tension comportant une inductance (L1), une diode (D5) et un commutateur (S1), une tension de circuit intermédiaire ($U_{ZW}$) pouvant être mise à disposition à la sortie du dispositif (12) de correction de facteur de puissance durant le fonctionnement du ballast électronique ;

- un circuit de charge (14) ayant une première (A1) et une deuxième borne de sortie (A2) pour le couplage avec la au moins une lampe à décharge (La), le circuit de charge (14) étant couplé à la sortie du dispositif (12) de correction du facteur de puissance ; et

- un dispositif de commande (16) comportant un régulateur I (20) ayant une entrée de valeur de consigne et une entrée de valeur réelle, l'entrée de valeur de consigne étant couplée à un dispositif de mise à disposition de valeur de consigne (18) pour la mise à disposition d'une grandeur ($U_{ZWsoll}$) corrélée à une valeur de consigne de la tension de circuit intermédiaire ($U_{ZW}$), l'entrée de valeur réelle étant couplée au circuit de charge (14) pour la mise à disposition d'une grandeur ($U_{ZWist}$) corrélée à une valeur réelle de la tension de circuit intermédiaire ($U_{ZW}$), le dispositif de commande (16) étant conçu pour fournir à sa sortie un signal de commande au commutateur (S1) du transformateur de tension, le signal de commande étant un signal rectangulaire, une grandeur de régulation du régulateur I (20) représentant une première composante ($t_{on1}$) du temps ON ($t_{on}$) du signal de commande, le temps ON ($t_{on}$) représentant la durée à l'intérieur d'une période du signal rectangulaire, pendant laquelle le commutateur (S1) du transformateur de tension est à l'état conducteur,

**caractérisé en ce que**
le ballast électronique comprend en outre un dispositif de détermination de puissance (24), conçu pour déterminer une grandeur corrélée à une puissance convertie dans la lampe à décharge (La) durant le fonctionnement de la au moins une lampe à décharge (La), le dispositif de détermination de puissance (24) étant couplé au dispositif de commande (16), le dispositif de commande (16) étant conçu pour faire varier le signal de commande en fonction de la puissance convertie dans la lampe à décharge (La), le dispositif de commande (16) étant conçu pour mettre à disposition une deuxième composante ($t_{on2}$) du temps ON ($t_{on}$) du signal de commande en fonction de la puissance convertie dans la lampe à décharge (La), la constante de temps du régulateur I (20) étant plus grande que la constante de temps de la variation en fonction de la puissance convertie dans la au moins une lampe à décharge (La), le dispositif de commande (16) étant conçu pour additionner les différentes composantes ($t_{on1}$, $t_{on2}$, $t_{on3}$) du temps ON ($t_{on}$).

2. Ballast électronique selon la revendication 1,
**caractérisé en ce que**

le dispositif de commande (16) est conçu pour augmenter la deuxième composante ($t_{on2}$) du temps ON ($t_{on}$) lorsqu'il constate une augmentation de la puissance convertie dans la au moins une lampe à décharge (La).

3. Ballast électronique selon l'une des revendications 1 ou 2,
**caractérisé en ce que**
un régulateur P (22) est monté en parallèle au régulateur I (20).

4. Ballast électronique selon la revendication 3,
**caractérisé en ce que**
le régulateur P (22) met à disposition une troisième composante ($t_{on3}$) du temps ON ($t_{on}$) du signal de commande.

5. Ballast électronique selon l'une des revendications 3 ou 4,
**caractérisé en ce que**
la fonction de transfert du régulateur P (22), qui représente la dépendance de la troisième composante ($t_{on3}$) du temps ON ($t_{on}$) d'une variation de la tension de circuit intermédiaire ($U_{ZW}$), comporte une portion centrale plane au niveau du passage par zéro.

6. Ballast électronique selon l'une des revendications 3 à 5,
**caractérisé en ce que**
la fonction de transfert du régulateur P (22), qui représente la dépendance de la troisième composante ($t_{on3}$) du temps ON ($t_{on}$) d'une variation de la tension de circuit intermédiaire ($U_{ZW}$), comporte au moins une portion ayant une pente prédéfinissable.

7. Ballast électronique selon la revendication 6,
**caractérisé en ce que**
le dispositif de commande (16) est conçu pour faire varier la pente prédéfinissable de la au moins une portion de la fonction de transfert du régulateur P (22), en particulier en fonction d'une variation ou d'une vitesse de variation de la tension de circuit intermédiaire ($U_{ZW}$).

8. Ballast électronique selon l'une des revendications précédentes,
**caractérisé en ce que**
le transformateur de tension représente un convertisseur boost.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10045712 A1
- US 20030076053 A1
- US 5623187 A
- EP 1189490 A1
- DE 19708783 C1
- DE 102009020884 A1
- EP 1624733 A2
- WO 02098187 A1
- EP 0596740 A1